# EUROPÄISCHE PATENTSCHRIFT

(11) **EP 1 307 659 B1**
(45) Veröffentlichungstag und Bekanntmachung des Hinweises auf die Patenterteilung: **09.03.2005**
(21) Anmeldenummer: 01943415.8
(22) Anmeldetag: 19.05.2001
(51) Int. Cl.: F16B 13/06

(54) **SPREIZANKER**
EXPANSION BOLT
BOULON A EXPANSION

(30) Priorität: 08.08.2000 DE 10038615
(43) Veröffentlichungstag der Anmeldung: 07.05.2003
(73) Patentinhaber: fischerwerke Artur Fischer GmbH & Co. KG, 72178 Waldachtal (DE)
(72) Erfinder: HEINZELMANN, Werner, 72250 Freudenstadt-Wittlensweiler (DE); MALLEE, Rainer, 72178 Waldachtal (DE)
(86) Internationale Anmeldenummer: PCT/EP2001/005762
(87) Internationale Veröffentlichungsnummer: WO 2002/012735

(56) Entgegenhaltungen:
- WO-A-00/32946
- DE-A- 19 538 898
- DE-A- 19 815 177
- US-A- 4 884 931

## Beschreibung

Die Erfindung betrifft einen Spreizanker mit den Merkmalen des Oberbegriffs des Anspruchs 1.

Derartige Spreizanker sind an sich bekannt. Die bekannten Spreizanker weisen einen Ankerbolzen mit einem Schraubengewinde an einem hinteren und einem Spreizkonus an einem vorderen Ende auf. Der Ankerbolzen mit dem Spreizkonus kann als Ankergrundteil bezeichnet werden. Auf den Ankerbolzen ist eine Spreizhülse aufgesetzt, die üblicherweise durch Längsschlitze in Spreizzungen unterteilt ist. Durch Aufschieben auf den Spreizkonus wird die Spreizhülse aufgespreizt und verankert dadurch den Spreizanker in einem Bohrloch. Das Aufspreizen erfolgt bei den bekannten Spreizankern durch Aufschrauben und Anziehen einer Mutter auf das Schraubengewinde des Ankerbolzens. Die Mutter drückt unmittelbar oder mittelbar über eine zwischen der Mutter und der Spreizhülse auf den Ankerbolzen aufgesetzte Hülse gegen die Spreizhülse, schiebt dadurch die Spreizhülse auf den Spreizkonus und spreizt die Spreizhülse auf. Diese Spreizanker haben den Nachteil, dass sie aufwendig und in Folge dessen teuer in der Herstellung sind. Weiterer Nachteil ist das Aufspreizen durch Aufschrauben und Festziehen der Mutter auf das Schraubengewinde des Ankerbolzens, das zeitaufwendig ist und das grundsätzlich mit einem Drehmomentschlüssel durchgeführt werden sollte.

Des Weiteren sind sog. Einschlaganker bekannt, die durch Eintreiben eines Spreizkörpers in eine Spreizhülse aufspreizbar sind. Ein Axialloch der Spreizhülse dieser Spreizanker verjüngt sich zwischen den Spreizzungen, so dass durch Eintreiben des vorzugsweise konischen Spreizkörpers die Spreizzungen aufspreizbar sind. Diese Spreizanker sind preisgünstig herstellbar und einfach und schnell mit Hilfe beispielsweise eines Eintreibdorns durch Hammerschläge aufspreizbar und dadurch in einem Bohrloch verankerbar. Diese Spreizanker haben jedoch den Nachteil, dass sie kein Nachspreizverhalten aufweisen, bei einer Bohrlocherweiterung beispielsweise durch Rissbildung lockern und lösen sich diese Spreizanker. ten aufweisen, bei einer Bohrlocherweiterung beispielsweise durch Rissbildung lockern und lösen sich diese Spreizanker.

Weiterhin ist aus der Druckschrift DE 195 38 898 ein Spreizanker bekannt mit einem einen Spreizabschnitt und ein Durchgangsloch aufweisenden Ankergrundteil sowie einer Spreizhülse, die axial verschieblich auf dem Spreizabschnitt aufgesetzt und durch Verschieben aufspreizbar ist. Das Ankergrundteil ist von seinem vorderen Stirnende ausgehend mit einem sich über einen Teil seiner Länge erstreckenden axialen Schlitz versehen. Die Spreizhülse weist einen Steg auf, der in dem axialen Schlitz des Ankergrundteils geführt wird. Zur Verankerung wird der Spreizanker soweit in das Bohrloch eingesetzt, bis das vordere Stirnende des Ankergrundteils auf dem Bohrlochgrund aufsitzt. Mit einem in die Innenbohrung des Ankergrundteils eingreifenden und auf den mittig angeordneten Steg der Spreizhülse aufsitzenden Einschlagwerkzeug wird nun die Spreizhülse axial verschoben und auf dem Spreizkonus des Ankergrundteils aufgetrieben. Der bekannte Spreizanker hat den Nachteil, dass die Spreizhülse stauchend über den Spreizkonus getrieben wird. Gegenüber einer ziehenden Verspreizung kann es hierdurch zu einem Aufstauen der Spreizhülse ohne ausreichende Radialkräfte kommen. Dies kann zu einer Störung des Nachspreizverhaltens führen, was die Eignung des Spreizankers für eine Verankerung in der Zugzone beeinträchtigt. Des Weiteren wird ein Haltedom als zusätzliches Bauteil benötigt, der den geschlitzten Spreizbereich radial stützt. Zusammen mit dem Längsschlitz im Ankergrundteil ergibt sich damit ein erheblicher Fertigungsaufwand.

Der Erfindung liegt daher die Aufgabe zu Grunde, einen Spreizanker so auszubilden, dass er preisgünstig herstellbar und einfach verankerbar ist und dass er ein störungsfreies Nachspreizverhalten aufweist.

Diese Aufgabe wird erfindungsgemäß durch die Merkmale des Anspruchs 1 gelöst. Das Ankergrundteil des erfindungsgemäßen Spreizankers weist ein Durchgangsloch in Längsrichtung auf. Die Spreizhülse des erfindungsgemäßen Spreizankers weist eine Spreizhülse auf, die den Spreizabschnitt von der in Einbringrichtung des Spreizankers vorderen Seite umschließt und das Durchgangsloch überdeckt. Durch das Durchgangsloch des Ankergrundteils lässt sich die Spreizhülse beispielsweise mittels eines Schlagdorns axial beaufschlagen und auf diese Weise auf den Spreizabschnitt des Ankergrundteils aufziehen und dadurch aufspreizen. Das Durchgangsloch im Ankergrundteil des erfindungsgemäßen Spreizankers ermöglicht somit ein Aufspreizen durch Schlagen und damit ein schnelles Verankern mit geringem Aufwand.

Weiterer Vorteil des erfindungsgemäßen Spreizankers ist dessen Nachspreizverhalten. Wird auf das Ankergrundteil des erfindungsgemäßen Spreizankers ein Zug ausgeübt und erweitert sich ein Bohrloch, in dem der Spreizanker verankert ist, beispielsweise in Folge von Rissbildung, so bewirkt der Zug auf das Ankergrundteil eine Verschiebung des Ankergrundteils in Bezug auf die Spreizhülse, die die Spreizhülse weiter auf den Spreizabschnitt des Ankergrundteils aufschiebt und dadurch weiter aufspreizt. Der Spreizanker bleibt dadurch mit nahezu unveränderter Verankerungskraft im Bohrloch verankert. Der erfindungsgemäße Spreizanker ist zur Verankerung in einem zylindrischen Bohrloch vorgesehen. Durch sein Nachspreizverhalten ist er im zylindrischen Bohrloch zugzonentauglich. Der Spreizabschnitt des erfindungsgemäßen Spreizankers ist vorzugsweise konisch, er ist allerdings nicht auf diese Form beschränkt, sondern kann auch eine andere, in Einbringrichtung sich aufweitende Form aufweisen.

In bevorzugter Ausgestaltung der Erfindung ist das Ankergrundteil als Hülse ausgebildet. Dies ermöglicht eine einfache, schnelle und preiswerte Herstellung des Ankergrundteils beispielsweise durch ein Umformverfahren. Das Ankergrundteil lässt sich beispielsweise aus Blech durch Biegen zu einer Hülse herstellen oder aus einem Rohr formen. Auch sonstige Massivumformverfahren sind möglich.

Der Spreizabschnitt weist vorzugsweise die Form eines Hohlkonus auf und ist an die das Ankergrundteil bildende Hülse angeformt. Zur Erhöhung der Stabilität in radialer Richtung ist der Spreizabschnitt bei einer Ausgestaltung der Erfindung doppelwandig ausgebildet.

Um die Spreizhülse mit geringer Radialkraft aufspreizen zu können, weist diese bei einer Ausgestaltung der Erfindung einen oder mehrere in Längsrichtung verlaufende Schlitze auf. Die Schlitze müssen nicht achsparallel verlaufen, sie können beispielsweise auch in einem Winkel zu einer Achsparallelen verlaufen.

In bevorzugter Ausgestaltung der Erfindung weist die Spreizhülse einen Innenkonus auf. In Verbindung mit einem konischen Spreizabschnitt des Ankergrundteils ergibt diese Ausgestaltung der Erfindung eine gleichmäßige Aufspreizung der Spreizhülse über ihre axiale Länge und in Umfangsrichtung. Dadurch wird eine hohe Verankerungskraft erreicht. Zur Anpassung an ein zylindrisches Bohrloch ist eine Außenfläche der Spreizhülse bei einer Ausgestaltung der Erfindung zylinderförmig.

Eine Ausgestaltung der Erfindung sieht einen Zapfen der Spreizhülse vor, der in das Durchgangsloch im Ankergrundteil eingreift. Dieser Zapfen dient zum einen zum axialen Beaufschlagen der Spreizhülse zum Aufschieben auf den Spreizabschnitt. Des Weiteren führt der Zapfen die Spreizhülse im Ankergrundteil und verhindert ein Kippen oder Verkanten der Spreizhülse, insbesondere wenn diese axial kurz ausgebildet ist.

Bei einer Ausgestaltung der Erfindung weist der Spreizanker einen Schlagstift auf, der im Bereich des Spreizabschnitts im Durchgangsloch des Ankergrundteils einliegt. Über den Schlagstift lässt sich die Spreizhülse axial beaufschlagen und dadurch auf den Spreizabschnitt aufschieben und aufspreizen. Der Schlagstift hat den Vorteil, dass er eine Verschiebung der Spreizhülse auf dem Spreizabschnitt nach dem Aufspreizen nicht behindert und dadurch das Nachspreizverhalten des erfindungsgemäßen Spreizankers nicht beeinflusst. Des Weiteren stützt der Schlagstift den Spreizabschnitt des Ankergrundteils stabil gegen eine radiale Beanspruchung ab, so dass der Spreizbereich einem Druck der Spreizhülse radial nach innen nicht nachgibt.

Die Erfindung wird nachfolgend anhand in der Zeichnung dargestellter Ausführungsbeispiele näher erläutert. Es zeigen:
- Figur 1: einen erfindungsgemäßen Spreizanker im Achsschnitt;
- Figur 2: den Spreizanker aus Figur 1 in verankertem Zustand;
- Figur 3: ein zweites Ausführungsbeispiel eines erfindungsgemäßen Spreizankers im Achsschnitt; und
- Figur 4: ein drittes Ausführungsbeispiel eines erfindungsgemäßen Spreizankers im Achsschnitt.

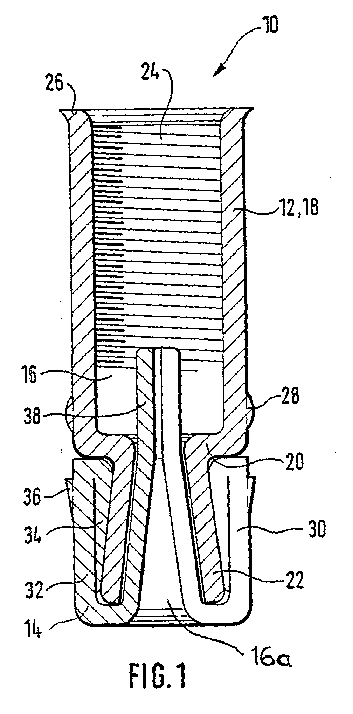

Der in Figur 1 dargestellte, erfindungsgemäße Spreizanker 10 weist ein Ankergrundteil 12 und eine Spreizhülse 14 auf. Das Ankergrundteil 12 ist aus einem Rohr hergestellt und weist demzufolge ein Durchgangsloch 16 in Längsrichtung auf. Das Ankergrundteil 12 ist über etwa 2/3 seiner Länge hohlzylindrisch, d. h. es weist einen rohrförmigen Abschnitt 18 auf. An den rohrförmigen Abschnitt 18 schließt sich über eine ringstufenförmige Verjüngung 20 ein Spreizabschnitt 22 an. Der Spreizabschnitt 22 bildet einen Hohlkonus, der sich vom rohrförmigen Abschnitt 18 weg aufweitet. Die Richtung, in die sich der Spreizabschnitt 22 aufweitet, ist eine Einbringrichtung des Spreizankers 10 in ein Bohrloch, der Spreizabschnitt 22 weitet sich in Richtung eines vorderen Endes des Spreizankers 10 auf. An seinem vorderen, aufgeweiteten Ende weist der Spreizabschnitt 22 einen Außendurchmesser auf, der in etwa einem Außendurchmesser des zylindrischen Abschnitts 18 abzüglich zweimal einer Wandstärke der Spreizhülse 14 entspricht, die Spreizhülse 14 hat näherungsweise den gleichen Außendurchmesser wie der zylindrische Abschnitt 18 des Ankergrundteils 12. Das Durchgangsloch 16 des Ankergrundteils 12 durchsetzt auch den Spreizabschnitt 22.

Die ringstufenförmige Verjüngung 20 und der sich hohlkonisch in Einbringrichtung des Spreizankers 10 erweiternde Spreizabschnitt 22 sind durch Umformen des das Ankergrundteil 12 bildenden Rohrs hergestellt. Beispielsweise sind die ringstufenförmige Verjüngung 20 und der Spreizabschnitt 22 durch Drückwalzen an den rohrförmigen Abschnitt 18 angeformt. Eine Außenumfangsfläche des hohlkonischen Spreizabschnitts 22 ist mit einer Gleitbeschichtung versehen, die eine reibungsarme axiale Verschieblichkeit der Spreizhülse 14 auf dem Spreizabschnitt 22 gewährleistet und ein "Fressen" dauerhaft. vermeidet. Mit "Fressen" ist eine axiale Schwergängigkeit oder Unbeweglichkeit der Spreizhülse 14 auf dem Spreizabschnitt 22 des Ankergrundteils 12 in Folge von Korrosionserscheinungen oder dgl. gemeint.

Der zylindrische Abschnitt 18 ist mit einem Innengewinde 24 versehen, das beispielsweise durch Rohr-Gewindewalzen hergestellt ist. Das Innengewinde 24 dient zur Befestigung eines zu verankernden Gegenstandes am erfindungsgemäßen Spreizanker 10. Ein dem Spreizabschnitt 22 ferner, hinterer Stirnrand des Ankergrundteils 12 ist durch Umformen radial nach außen zu einem Setztiefenbund 26 umgeformt. Eine Wandung des rohrförmigen Abschnitts 18 ist mit nach außen stehenden Ausprägungen 28 versehen um ein Klemmen des Ankergrundteils 12 in einem Bohrloch zu erreichen.

Die Spreizhülse 14 ist aus einem Blechstück hergestellt, das zu einer Hülse, nämlich der Spreizhülse 14 gebogen ist. Die Spreizhülse 14 weist einen durchgehenden Längsschlitz 30 auf, der ein Aufweiten/Aufspreizen der Spreizhülse 14 ermöglicht. Die Spreizhülse 14 kann mit weiteren, nicht durchgehenden Längsschlitzen versehen sein, um das Aufspreizen zu erleichtern (nicht dargestellt). Die Spreizhülse 14 weist einen hohlzylindrischen Abschnitt 32 auf, mit dem sie den Spreizabschnitt 22 des Ankergrundteils 12 umschließt. Der hohlzylindrische Abschnitt 32 der Spreizhülse 14 weist in etwa die gleiche Länge wie der Spreizabschnitt 22 des Ankergrundteils 12 auf. Auf einer dem rohrförmigen Abschnitt 18 des Ankergrundteils 12 zugewandten Stirnseite ist die Spreizhülse 14 auf eine Innenseite ihres hohlzylindrischen Abschnitts 32 anliegend umgeformt. Der nach innen umgeformte Abschnitt 34 weist eine dreiecksförmige Achsschnittfläche auf, so dass die Spreizhülse 14 in ihrem den Spreizabschnitt 22 des Ankergrundteils 12 umschließenden Teil eine zylindrische Außenfläche und eine konische, zum Hohlkonus des Spreizabschnitts 22 komplementäre Innenfläche aufweist. Mit ihrer konischen Innenfläche liegt die Spreizhülse 22 axial verschieblich am Spreizabschnitt 22 des Ankergrundteils 12 an. Ein Außendurchmesser des rohrförmigen Abschnitts 18 des Ankergrundteils 12 und. der Spreizhülse 14 stimmen näherungsweise überein.

Am hohlzylindrischen Abschnitt 32 der Spreizhülse 22 sind nach außen stehende, widerhakenförmige Krallen 36 ausgeformt, die einen guten axialen Halt der Spreizhülse 14 in einem Bohrloch gegen Herausziehen sicher stellen sollen.

An einem vorderen, dem rohrförmigen Abschnitt 18 des Ankergrundteils 12 fernen Stirnende ist die Spreizhülse 14 um den vorderen Stirnrand des hohlkonischen Spreizabschnitts 22 herum nach innen zu einem Zapfen 38 umgeformt. Dieser Zapfen 38 durchsetzt den Spreizabschnitt 22 und ragt ein Stück weit in den rohrförmigen Abschnitt 18 des Ankergrundteils 12 des erfindungsgemäßen Spreizankers 10 hinein. Der Zapfen 38 führt die Spreizhülse 14 im Spreizabschnitt 22 und verhindert ein Verkanten der Spreizhülse 14.

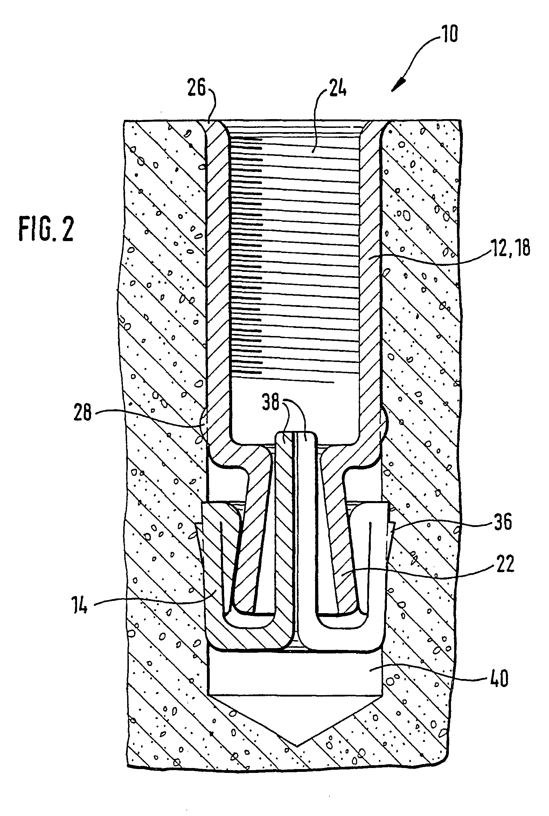

Die Verankerung und Verwendung des erfindungsgemäßen Spreizankers 10 ist in Figur 2 dargestellt. Zur Verankerung wird der Spreizanker 10 mit seiner Spreizhülse 14 voraus in ein zylindrisches Bohrloch 40 beispielsweise in Beton eingebracht. Das Bohrloch 40 muss tiefer als der Spreizanker 10 lang sein, das Bohrloch 40 kann auch ein Durchgangsloch sein. Der Spreizanker 10 wird in das Bohrloch 40 eingebracht, bis er mit seinem Setztiefenbund 26 am Beton anliegt oder bis er bündig oder etwas versenkt im Bohrloch 40 einliegt. Anschließend wird ein nicht dargestelltes Schlagwerkzeug, beispielsweise ein Schlagdorn, in den hohlzylindrischen Abschnitt 18 des Ankergrundteils 12 eingeführt und beispielsweise durch Hammerschläge wird die Spreizhülse 14 über ihren Zapfen 38 axial beaufschlagt. Die Spreizhülse 14 wird dadurch axial auf dem Spreizabschnitt 22 des Ankergrundteils 12 verschoben und aufgeweitet, d. h. aufgespreizt. Die Spreizhülse 14 verklemmt bzw. verkeilt sich und das Ankergrundteil 12 im Bohrloch 40, der erfindungsgemäße Spreizanker 10 ist im Bohrloch 40 verankert. Das Aufspreizen und Verankern des Spreizankers 10 im Bohrloch 40 kann auch maschinell erfolgen. Beispielsweise mittels einer in das Innengewinde 24 eingedrehten, nicht dargestellten Schraube lässt sich ein Gegenstand an dem im Beton verankerten Spreizanker 10 befestigen.

Weitet sich das Bohrloch 40 beispielsweise in Folge einer Rissbildung im Beton auf, so bewirkt ein axialer Zug am Ankergrundteil 12 eine axiale Verschiebung des Ankergrundteils 12 in Bezug auf die Spreizhülse 14, die durch ihre Krallen 36 axial unbeweglich im Bohrloch 40 fixiert ist. Die axiale Verschiebung des Ankergrundteils 12 bewirkt ein weiteres Aufspreizen der Spreizhülse 14, wodurch der erfindungsgemäße Spreizanker 10 mit in etwa unveränderter Verankerungskraft im aufgeweiteten Bohrloch 40 verankert bleibt. Der erfindungsgemäße Spreizanker 10 weist also ein sog. Nachspreizverhalten bei einer Bohrlocherweiterung auf.

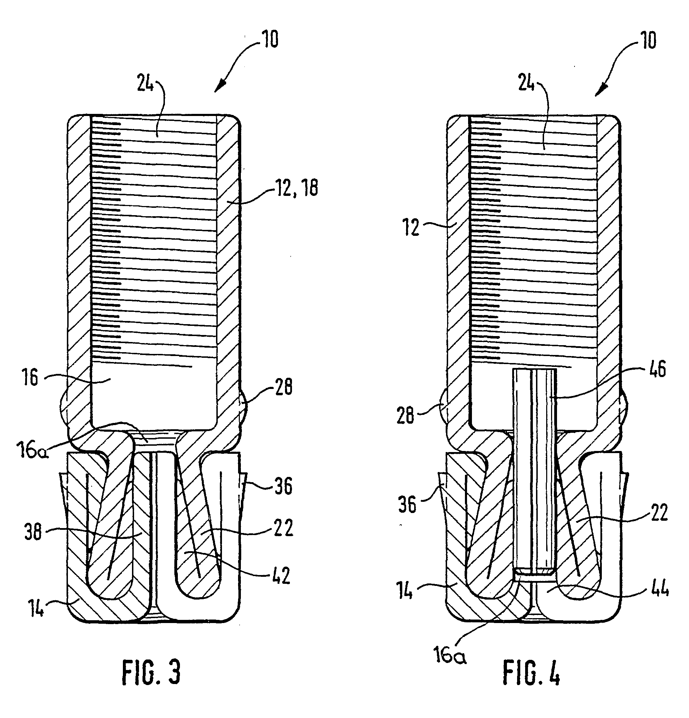

Bei dem in Figur 3 dargestellten, erfindungsgemäßen Spreizanker 10 ist der Spreizabschnitt 22 des Ankergrundteils 12 an seinem freien, vorderen Stirnrand nach innen anliegend umgeformt. Dies bedeutet, der Spreizabschnitt 22 ist doppelwandig. Der nach innen umgeformte Abschnitt 42 weist eine dreiecksförmige Achsschnittfläche auf, das das Ankergrundteil 12 durchsetzende Durchgangsloch 16 ist innerhalb des Spreizabschnitts 22 zylindrisch. Durch die doppelwandige Ausbildung weist der Spreizbereich 22 des in Figur 3 dargestellten Spreizankers 10 eine höhere Stabilität auf. Der Zapfen 38 der Spreizhülse 14 ist verkürzt ausgebildet, so dass er nicht in den rohrförmigen Abschnitt 18 des Ankergrundteils 12 ragt. Zur Verankerung ist daher ein Schlagwerkzeug zu verwenden, das einen in das Durchgangsloch 16 a passenden Fortsatz aufweist. Im Übrigen sind die in Figuren 1 und 3 dargestellten, erfindungsgemäßen Spreizanker 10 übereinstimmend ausgebildet und funktionieren in gleicher Weise. Zur Vermeidung von Wiederholungen wird insoweit hinsichtlich Figur 3 auf die Ausführungen zu Figuren 1 und 2 verwiesen. Für gleiche Bauteile werden gleiche Bezugszeichen verwendet.

Bei dem in Figur 4 dargestellten, erfindungsgemäßen Spreizanker 10 ist der Zapfen der Spreizhülse 14 auf einen kurzen Stummel 44 verkürzt, der in das vordere Stirnende des hohlkonischen Spreizabschnitts 22 des Ankergrundteils 12 eingreift. In den Spreizabschnitt 22 ist ein Schlagstift 46 klemmend eingesetzt. Als Schlagstift 46 findet ein Zylinderkerbstift Verwendung. Diese Ausgestaltung der Erfindung hat den Vorteil, dass der Schlagstift 46 bei einem Nachspreizen des Spreizankers 10 die Relativbewegung der Spreizhülse 14 in Bezug auf das Ankergrundteil 12 nicht mitmacht und deswegen die Nachspreizfunktion nicht beeinträchtigt. Ein eventuelles "Fressen" des Schlagstifts 46 im Spreizabschnitt 22 behindert das Nachspreizen des Spreizankers 10 nicht. Des Weiteren stützt der Schlagstift 46 den Spreizabschnitt 22 stabil gegen radiales Zusammendrücken. Im Übrigen sind die in Figuren 3 und 4 dargestellten, erfindungsgemäßen Spreizanker 10 gleich ausgebildet und funktionieren in gleicher Weise, zur Vermeidung von Wiederholungen wird insoweit auf die Ausführungen zu Figur 3 verwiesen.

## Patentansprüche

1. Spreizanker, mit einem Ankergrundteil (12), das in ein Bohrloch (40) einbringbar ist und das einen Spreizabschnitt (22) aufweist, der sich in Einbringrichtung des Spreizankers (10) aufweitet, und wobei das Ankergrundteil (12) ein Durchgangsloch (16,16 a) in Längsrichtung aufweist, und mit einer Spreizhülse (14), die axial verschieblich auf dem Spreizabschnitt aufgesetzt und durch Verschieben aufspreizbar ist, **dadurch gekennzeichnet, dass** die Spreizhülse (14) den Spreizabschnitt (22) von der in Einbringrichtung des Spreizankers (10) vorderen Seite umschließt und das Durchgangsloch (16 a) überdeckt.

2. Spreizanker nach Anspruch 1, **dadurch gekennzeichnet, dass** das Ankergrundteil (12) als Hülse ausgebildet ist.

3. Spreizanker nach Anspruch 1, **dadurch gekennzeichnet, dass** der Spreizabschnitt (22) als Hohlkonus an die das Ankergrundteil (12) bildende Hülse angeformt ist.

4. Spreizanker nach Anspruch 1, **dadurch gekennzeichnet, dass** der Spreizabschnitt (22) doppelwandig ist.

5. Spreizanker nach Anspruch 1, **dadurch gekennzeichnet, dass** die Spreizhülse (14) einen in Längsrichtung verlaufenden Schlitz (30) aufweist.

6. Spreizanker nach Anspruch 1, **dadurch gekennzeichnet, dass** die Spreizhülse (14) einen Innenkonus aufweist.

7. Spreizanker nach Anspruch 1, **dadurch gekennzeichnet, dass** die Spreizhülse (14) eine zylinderförmige Außenfläche aufweist.

8. Spreizanker nach Anspruch 1, **dadurch gekennzeichnet, dass** die Spreizhülse (14) einen Zapfen (38) aufweist, der in das Durchgangsloch (16, 16 a) im Ankergrundteil (12) eingreift.

9. Spreizanker nach Anspruch 1, **dadurch gekennzeichnet, dass** der Spreizanker (10) einen Schlagstift (46) aufweist, der im Spreizabschnitt (22) des Ankergrundteils (12) einliegt und mit dem die Spreizhülse (14) axial beaufschlagbar ist.

## Claims

1. Expansible anchor having a basic anchor part (12), which is arranged to be introduced into a drilled hole (40) and has an expansion portion (22) which widens out in the direction of introduction of the expansible anchor (10), the basic anchor part (12) having a through-hole (16, 16 a) in the longitudinal direction, and having an expansion sleeve (14), which is so mounted on the expansion portion as to be axially displaceable and is arranged to be expanded as a result of displacement, **characterised in that** the expansion sleeve (14) surrounds the expansion portion (22) from the end which is to the front in the direction of introduction of the expansible anchor (10), and covers over the through-hole (16 a).

2. Expansible anchor according to claim 1, **characterised in that** the basic anchor part (12) is in the form of a sleeve.

3. Expansible anchor according to claim 1, **characterised in that** the expansion portion (22) is in the form of a hollow cone formed on the sleeve comprising the basic anchor part (12).

4. Expansible anchor according to claim 1, **characterised in that** the expansion portion (22) is double-walled.

5. Expansible anchor according to claim 1, **characterised in that** the expansion sleeve (14) has a slit (30) extending in the longitudinal direction.

6. Expansible anchor according to claim 1, **characterised in that** the expansion sleeve (14) has an internal cone.

7. Expansible anchor according to claim 1, **characterised in that** the expansion sleeve (14) has a cylindrical external surface.

8. Expansible anchor according to claim 1, **characterised in that** the expansion sleeve (14) has a peg (38), which engages in the through-hole (16, 16 a) in the basic anchor part (12).

9. Expansible anchor according to claim 1, **characterised in that** the expansible anchor (10) has a striking pin (46), which is located in the expansion portion (22) of the basic anchor part (12) and by way of which the expansion sleeve (14) can be subjected to axial force.

## Revendications

1. Elément d'ancrage d'expansion, avec une partie de base d'ancrage (12), qui peut être introduit dans une forure (40) et qui comprend une section d'expansion (22), qui s'élargit dans la direction d'introduction de l'élément d'ancrage d'expansion (10), et la partie de base d'ancrage (12) comprenant un trou de passage (16, 16a) dans la direction longitudinale, et avec une coquille d'expansion (14), qui est montée en étant mobile dans le sens axial sur la section d'expansion et qui peut être écartée par déplacement, **caractérisé en ce que** la coquille d'expansion (14) entoure la section d'expansion (22) depuis le côté avant dans la direction d'introduction de l'élément d'ancrage d'expansion (10) et recouvre le trou de passage (16a).

2. Elément d'ancrage d'expansion selon la revendication 1, **caractérisé en ce que** la partie de base d'ancrage (12) est conçue comme une coquille.

3. Elément d'ancrage d'expansion selon la revendication 1, **caractérisé en ce que** la section d'expansion (22) est formée comme un cône creux sur la coquille formant la partie de base d'ancrage (12).

4. Elément d'ancrage d'expansion selon la revendication 1, **caractérisé en ce que** la section d'expansion (22) présente deux parois.

5. Elément d'ancrage d'expansion selon la revendication 1, **caractérisé en ce que** la coquille d'expansion (14) comprend une fente (30) s'étendant dans la direction longitudinale.

6. Elément d'ancrage d'expansion selon la revendication 1, **caractérisé en ce que** la coquille d'expansion (14) comprend un cône intérieur.

7. Elément d'ancrage d'expansion selon la revendication 1, **caractérisé en ce que** la coquille d'expansion (14) comprend une surface extérieure cylindrique.

8. Elément d'ancrage d'expansion selon la revendication 1, **caractérisé en ce que** la coquille d'expansion (14) comprend un tourillon (38) qui se met en prise dans le trou de passage (16, 16a) de la partie de base d'ancrage (12).

9. Elément d'ancrage d'expansion selon la revendication 1, **caractérisé en ce que** l'élément d'ancrage d'expansion (10) comprend une goupille à enfoncer (46) qui est logée dans la section d'expansion (22) de la partie de base d'ancrage (12) et avec laquelle peut être sollicitée la coquille d'expansion (14) dans le sens axial.
